(19) **Europäisches Patentamt**

**European Patent Office**

**Office européen des brevets**

(11) **EP 1 619 884 A1**

(12) **EUROPEAN PATENT APPLICATION**
published in accordance with Art. 158(3) EPC

(43) Date of publication:
**25.01.2006 Bulletin 2006/04**

(21) Application number: **04728503.6**

(22) Date of filing: **21.04.2004**

(51) Int Cl.:
*H04N 5/44* (1968.09)

(86) International application number:
**PCT/CN2004/000384**

(87) International publication number:
**WO 2004/098177 (11.11.2004 Gazette 2004/46)**

(84) Designated Contracting States:
**AT BE BG CH CY CZ DE DK EE ES FI FR GB GR
HU IE IT LI LU MC NL PL PT RO SE SI SK TR**
Designated Extension States:
**AL HR LT LV MK**

(30) Priority: **30.04.2003 CN 03123077**

(71) Applicant: **MATSUSHITA ELECTRIC INDUSTRIAL
CO., LTD.
Kadoma-shi, Osaka 571-8501 (JP)**

(72) Inventors:
• **YU, Xuwen,
18th Floor, Zhongguancun Tower
Beijing 100080 (CN)**
• **ZHENG, Wentao,
18th Floor, Zhongguancun Tower
Beijing 100080 (CN)**

(74) Representative: **Grünecker, Kinkeldey,
Stockmair & Schwanhäusser
Anwaltssozietät
Maximilianstrasse 58
80538 München (DE)**

(54) **APPARATUS FOR AUTOMATICALLY DETECTING TELEVISION ADVERTISEMENTS AND METHOD THEREOF**

(57) The present invention discloses an apparatus for automatically detecting television advertisements comprising: a video frame buffer for storing a first group of video frames and a second group of video frames received by a television in which a scene change rate of the second group of video frames is substantially different from that of the first group of video frames; a video scene change detection and calculation means for reading the first and second groups of video frames stored in the video frame buffer, determining the last frame immediately before the first group of video frames changes into the second group of video frames as a prompting frame, and calculating a correlation between a newly received video frame and the prompting frame; a prompting signal generation means for generating a prompting signal when the correlation between the newly received video frame and the prompting frame, which is detected by the video scene change detection and calculation means, is equal to or larger than a predetermined threshold; and a control means for controlling the operation of the video scene change detection and calculation means. The present invention also discloses a method for automatically detecting television advertisements.

Fig. 1

**Description**

BACKGROUND OF THE INVENTION

FIELD OF INVENTION

The present invention relates to an apparatus for detecting advertisements received by a television receiver and method thereof, more particularly, to an apparatus for detecting advertisements played in a received television program and prompting the viewers that the advertisements are over when the advertisements is played out and to continually watching the television program, and method of the same.

**DESCRIPTION OF PRIOR ART**

At present, there are a lot of commercial advertisements inserted in the broadcast television programs. These advertisements not only have redundant contents but also has a long playing period, which might cause the television viewers feel boring. Heretofore, many methods have already been suggested to avoid these commercial advertisements, for example, turning the sound of the played advertisements off, changing channels, or temporally leaving the television set away to deal with other things. However, since it is difficult to determine the played period of the advertisements, when the television viewers come back to continue watching the desired programs, the advertisements has still not finished, or the desired programs have been played for a moment, so that a part of program is missed.

The most direct solution of avoiding advertisements is to hide some information in the television advertisement programs, for example, using digital watermark technique or flag information, or embedding the information into the program code stream by using a specific identifier when the program is digitally encoded. Thus, when the television reception party receives these programs, a certain program can be determined to be advertisements by detecting the specific digital watermark or identifier. However, this method not only increases the processing load of the television program transmission party, but also is not accepted by the advertisement producer.

A system used to avoid the recording of advertisements while recording programs is disclosed in Chinese Patent Publication No. CN1118967A entitle "Broadcast recording system for recording broadcast contents without recording advertisement" published on March 30, 1996. This publication discloses a method and an apparatus for removing advertisement contents from the recorded television broadcasts. The utilized technical solution consists in that a central station monitors the television broadcasts, and sends control and indicative broadcasts to a receiver located in the user's premises. The indicative broadcast includes a schedule table for the television programs and control data for the video recorder. A processor receiving broadcasts pauses and resumes the recording procedure of the recognized broadcasts according to this control broadcast. The user can phone the central station to request to program the user's video recorder so that the video recorder can record a certain broadcast program.

The disclosed broadcast recording system avoids advertisements present in the recorded television program through a predetermined procedure based on the pre-scheduled television play timetable. However, this system has a complex structure, and needs communication with the central station so as to program the video recorder and thus has a troublesome procedure. In addition, this publication only avoids advertisement present in the recorded video programs, but does not solve the problem of avoiding advertisement while watching television. Furthermore, since the schedule of programs may be changed at any time, therefore the problem to avoid watching advertisements can not be completely solved only based on the time factors.

An automatically activated advertisement information timer is disclosed in Chinese Patent ZL901000863 (Publication No. CN1022661C) granted to RCA Licensing S. A. on November 3, 1996. The disclosed advertisement timer stores data about the previous tuned channel according to a channel changing instruction and repeats timing with a predetermined time limit. Each time the predetermined time limit is reached, the user will be noticed that the advertisements on the previous tuned channel might be over. The user can avoid the advertisements on the previous tuned channel by activating the time and searching for other channels. In the disclosed information timer, it is still time-relevant.

All the apparatus and method to avoid watching advertisements mentioned in the above conventional techniques require the user to preset a time period without establishing direct connections with the advertisement picture played on the television. Therefore, there are still the problems of not avoiding or not completely avoiding the advertisements due to the inappropriate setting of the time period or the changes in the play time of the programs, or missing a part of the desired program due to not changing back to the channel after the advertisements are over. For this reason, the prior art has a disadvantage of unable to accurately determine when the advertisements are played out in order to notify the viewer to watch the desired program in time.

The conventional methods and apparatuses do not fully consider the characteristics of the advertisements themselves and the continuity possibly owned by the programs. If an advertisement is inserted in the middle of a program, then the program will have a great continuity before and after the advertisement. And, an advertisement is apparently different from a common program. The length of one television advertisement is generally very shot such as several seconds to tens of seconds. In so short duration, in order to clearly and concisely express the characters of goods, it requires the number of the pictures as many as possible so as to fully deliver information. Thus, the scene change rate of the advertisement is fast, and the color contrast thereof is strong.

Considering the above problems, there is a need for an apparatus and a method which is capable of detecting the played advertisement pictures and determining when the advertisement is finished so as to accurately notify the viewer that the advertisement has been played out.

**SUMMARY OF THE INVENTION**

It is an object of the present invention to provide an apparatus and a method for timely notifying a viewer to watch a desired television program by detecting a correlation among pictures displayed on the television screen so as to determine an end of the play of advertisements.

According to one aspect of the present invention, there is provided an apparatus for automatically detecting television advertisements comprising: a video frame buffer for storing a first group of video frames and a second group of video frames received by a television in which a scene change rate of the second group of video frames is substantially different from that of the first group of video frames; a video scene change detection and calculation means for reading the first and second groups of video frames stored in the video frame buffer, determining the last frame immediately before the first group of video frames changes into the second group of video frames as a prompting frame, and calculating a correlation between a newly received video frame and the prompting frame; a prompting signal generation means for generating a prompting signal when the correlation between the newly received video frame and the prompting frame, which is detected by the video scene change detection and calculation means, is equal to or larger than a predetermined threshold; and a control means for controlling the operations of the video scene change detection and calculation means.

According to another aspect of the present invention, there is provided an apparatus for automatically detecting television advertisements comprising: a video frame buffer for storing a first group of video frames and a second group of video frames received by a television in which a scene change rate of the second group of video frames is substantially different from that of the first group of video frames; a video scene change detection and calculation means for reading the first and second groups of video frames stored in the video frame buffer, determining the last frame immediately before the first group of video frames changes into the second group of video frames as a prompting frame, and calculating a correlation between a newly received video frame and the prompting frame; a prompting signal generation means for generating a prompting signal when the correlation between the newly received video frame and the prompting frame, which is detected by the video scene change detection and calculation means, is equal to or larger than a predetermined threshold; and a control means for controlling the prompting signal generation means to generate the prompting signal in accordance with the changing from the second group of video frames to the first group of video frames detected by the video scene change detection and calculation means.

According to still another aspect of the present invention, there is provided a method for automatically detecting television advertisements comprising the steps of: storing a first group of video frames and a second group of video frames received by a television in which a scene change rate of the second group of video frames is substantially different from that of the first group of video frames; when an instruction to prompt an end of the advertisements is received, reading the stored first and second groups of video frames, and detecting when the second group of video frames is changed into a video frame associated with the first group of video frames; generating a prompting signal when the second group of video frames is changed into the first group of video frames.

The apparatus and method for automatically detecting television advertisements according to the present invention can make the viewer not wait for the end of the television advertisements any more, and not worry about the missing of the previous watched program while doing other things or watching other channels.

**BRIEF DESCRIPTION OF THE DRAWINGS**

The above and other objects, features and advantages of the present invention will be more apparent from the following detailed description about the non-limited embodiments of the present invention taken in conjunction with the accompanied drawings, in which:

Fig. 1 is a block diagram showing a configuration of an apparatus for automatically detecting television advertisements according to an embodiment of the present invention;

Fig. 2 is a flowchart showing operations for automatically detecting television advertisements according to the embodiment of the present invention;

Fig. 3 is a schematic diagram showing the video scene change characteristics of television advertisements and normal television programs; and

Fig. 4 is a block diagram showing a configuration of an apparatus for automatically detecting television advertisements according to another embodiment of the present invention.

## DETAILED DESCRIPTION OF PREFERRED EMBODIMENTS

First of all, the principles of the apparatus and method for automatically detecting television advertisements according to the present invention will be briefly introduced. The present invention fully takes consideration about the apparent differences between the video images for advertisements and those for normal television programs, and uses the correlation between the video image frames to detect whether a television advertisement is finished.

Generally, there is a strong correlation between the video image frames of a television program. If an advertisement is inserted into the television program being played, then the video image will be changed greatly. And when the television program is resumed to be played after the end of the advertisement, then the played video image frame of the television program will strongly correlate with the last frame or the several frame played immediately before the advertisement was played in continuity. Therefore, whether the advertisements are played out or not can be detected by comparing the correlation among the video images.

The embodiments of the apparatus for automatically detecting television advertisements according to the present invention will be described in detail with reference to the drawings in the following.

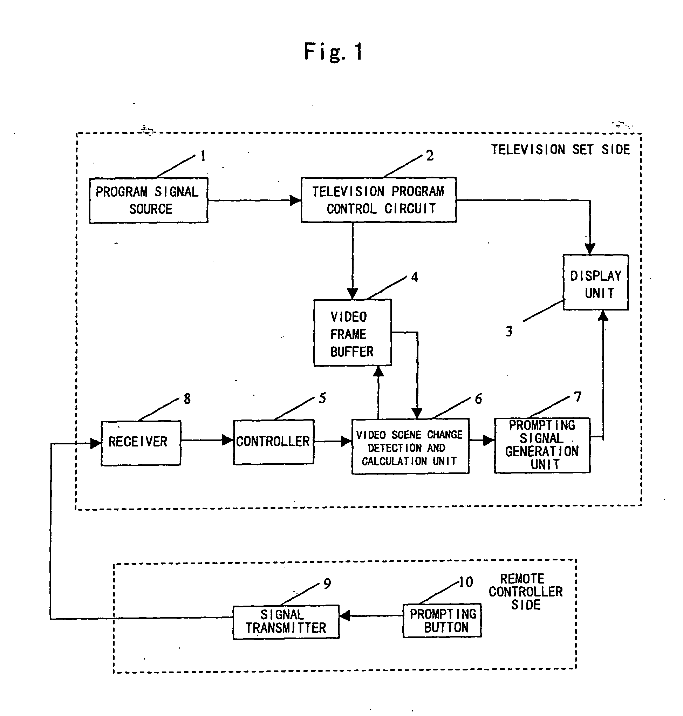

Fig. 1 shows the apparatus for automatically detecting television advertisements according to an embodiment of the present invention. As shown in Fig. 1, the apparatus for automatically detecting television advertisements according to the present invention may include two portions, a television set and a remote controller. An advertisement finish prompting button for prompting that the advertisements are played out is newly added into the remote controller portion. It should note that the present invention is not limited thereto and may have only a television set. When the television begins to play advertisements, a viewer may send an instruction to prompt the end of the advertisements to the television set via a signal transmitter 9 by pressing the advertisement finish prompting button 10 provided on the remote controller.

The television receiver portion comprises a program signal source 1, a television program control unit 2, a display unit 3, a video frame buffer 4, a controller 5, a video scene change detection and calculation unit 6, a prompting signal generation unit 7 and a receiver 8.

In the apparatus for automatically detecting television advertisements according to the present invention, in addition to the existing units in the television set, the video frame buffer 4, the controller 5, the video scene change detection and calculation unit 6, the prompting signal generation unit 7 and the receiver 8 are newly added. The receiver 8 can be omitted, and in this case, the controller 5 directly receives the instruction to prompt the end of the advertisements sent from the signal transmitter 9 of the remote controller.

The television program control unit 2 receives video signals transmitted from the program signal source 1 via an antenna (not shown), and obtains video signals to be displayed after a tuner component therein (not shown) performs tuning and conversion. The television program control unit 2 inputs the processed video signals into the display unit 3 for displaying the program. The display unit 3 can be a display such as a cathode-ray tube, a liquid crystal display or a plasma display.

Furthermore, as the apparatus for automatically detecting television advertisements according to the present invention, the video frame buffer 4 receives the video signals to be displayed from the television program control unit 2. The video frame buffer 4 stores the video signals which can be played for several seconds such as 5 to 10 seconds. Those video frame data input from the television program control unit 2 into the video frame buffer 4 can be sequentially stored in the video frame buffer 4 frame by frame. The video frame buffer 4 is connected to the video scene change detection and calculation unit 6. The video scene change detection and calculation unit 6 reads the video frames stored in the video frame buffer 4, and determines scene changes of the read video frames. When the last advertisement image is played out and changed into the television program played before the advertisement was played, a signal is output to the prompting signal generation unit 7. As an example, the video frame buffer 4 is provided with a dedicated storage area for storing a previous frame before the video switching occurs. The video scene change detection and calculation unit 6 stores the previous frame before the determined video switching frame into the dedicated storage area within the video frame buffer 4. For instance, the video frame buffer 4, the controller 5 and the video scene change detection and calculation unit 6 can be implemented by a central processing unit (CPU).

The receiver 8 in the television set receives the instruction to prompt the end of the advertisements transmitted from the signal transmitter 9 of the remote controller. The receiver 8 is connected to the controller 5, and after the instruction to prompt the end of the advertisements is received, the receiver 8 inputs an activating signal to the controller 5. After the controller 5 receives the activating signal, it provides a control signal to the video scene change detection and calculation unit 6 so that the video scene change detection and calculation unit 6 is controlled to read the stored video frame from the video frame buffer 4 and to perform the calculation function for calculating the switching frame and detecting the newly received video frames associated with the switching frame. When the received video frame associated with the video frame stored in the dedicated storage area is detected, a control signal is output to the prompting signal generation unit 7 so that the prompting signal generation unit 7 generates a signal for prompting the end of the advertisements. The signal for prompting the end of the advertisements can be a caption displayed on the display 3 or in other forms of signals such as audible sound signals to prompt the viewers.

Next, the operations of the apparatus for automatically detecting television advertisements according to the present invention will be described. The television program control unit 2 of the television set receives broadcast television programs. The output of the television program control unit 2 is connected to the video frame buffer 4 and the display 3, and the played television program is displayed on the display 3. In order to fulfill the needs for the following described process, the video frame buffer 4 records relevant information, for example, 5 to 10 seconds before current program. For a case of 25 frames per second, there are about 200 frames of the program contents to be stored. The actual storage capacity is related to the resolution standard of the television picture and predetermined time to be stored, and whether a certain image compress method is employed. For example, it maybe need a storage space of several millions of bytes. In order to reduce the storage capacity, a large compress ratio can be used for the video data. By way of an example, the method described below only uses information about two relevant frames, and thus in fact, only images of the adjacent two frames currently processed and the image frame maintained before the scene changes are necessarily stored. Therefore, the necessary storage capacity can be greatly reduced.

The television program control unit 2 stores the previous video frame for 5 to 10 seconds, for example, before the currently received video contents into the video frame buffer 4, in addition to inputting the video images into the display 3. When advertisements are started in the progress of the viewer's watching the television programs, the viewer can press the advertisement finish prompting button 10 on the remote controller immediately, and the transmitter 9 in the remote controller sends the instruction to prompt the end of the advertisements to the receiver 8 included in the television set. After receiving the instruction transmitted by the transmitter 9, the receiver 8 provides the activating signal to the controller 5. Thereafter, the controller 5 controls the video scene change detection and calculation unit 6 to detect a switching video image when the advertisements start in accordance with a video image switching detection algorithm, and to select the previous frame of the switching image as a prompting frame stored in the buffer. It should note that a memory for storing the prompting frame may be provided separately from the video frame buffer. For example, the video image switching detection algorithm is performed based on the correlations among the continuous frames of the played images. Because there are great differences between the program images and the advertisement images and there are great correlations among the advertisement images, the video scene change detection and calculation unit 6, after receiving the control signal from the controller 5, calculates frame by frame, the correlation between a frame and its previous frame from the last stored frame of the video images. When it is determined that the correlation between one stored frame and its previous frame is smaller than a preset threshold, this previous frame of image is determined as the last frame before changing, i.e., the last frame of the television program before the advertisements stating. Hereafter, this frame will be referred as a prompting frame, and the last frame of the television program is stored in the dedicated storage area provided in the video frame buffer 4 to be used later. Alternatively, the prompting frame can be stored in a memory (not shown). For instance, the video image frames of the played television program can be referred as a first group of video frames, and the video image frames of the played advertisements can be referred as a second group of video frames.

During the advertisements are being played, the video frame buffer 4 still stores image data which is currently played previous 5 to 10 seconds for example, and the video scene change detection and calculation unit 6 compares the latest received image frame with the stored prompting frame. Generally, there are great correlations between the images of the television before and after the advertisements. When the correlation obtained as a result of comparing the latest received image frame with the prompting frame is larger than a predetermined threshold, it is then considered that the advertisement images have already been changed into the program images. That is, the program is resumed. At this time, the video scene change detection and calculation unit 6 outputs the control signal to the prompting signal generation unit 7. The prompting signal generation unit 7 generates the signal for prompting the end of the advertisement to display it on the display 3, or generates sounds to prompt the viewers.

In the image processing field, there are many methods for inter-frame correlation analysis, and the mostly used is template matching in which the grey values or color values for pixels at the same positions in two images are compared and the sum of the respective grey differences or color differences is calculated.

For example, when an image has a size of X*Y, then the inter-frame difference is calculated according to the following equation (1).

$$d(I_i, I_j) = \sum_{x=0, y=0}^{x<X, y<Y} |I_i(x, y) - I_j(x, y)| \qquad \ldots (1)$$

wherein $I_i$ and $I_j$ denote the two frames of images respectively, x and y denote horizontal and vertical coordinates of the image respectively, and $I_i(x, y)$ represents the grey values of the image at the point (x, y).

Since the continuity of the program is mainly in the consistence of the scene, it can achieve a better effect preferably using the histogram matching in order to avoid influences from interferences and movements of objects etc.

For grey (non-color) images, the inter-frame difference is calculated according to the following equation (2).

$$d(I_i, I_j) = \sum_{k=1}^{n} |H_i(k) - H_j(k)| \qquad \ldots (2)$$

where H denotes a color histogram representation.

$H_i$ is the histogram of the image $I_i$, where $I_i$ is classified into n grey scales (n is a natural number), the sum of the number of pixels having the $k^{th}$ grey scale is $H_i(k)$.

For color images, histograms of difference color channels can be respectively calculated and finally the results are summed up. For example, for images represented by RGB, the histograms thereof can be obtained according to three channels R (red), G (green) and B (blue), and finally the results are summed up as shown by the Equation (3) as follow.

$$d(I_i, I_j) = \sum_{k=1}^{n} |H_i^R(k) - H_j^R(k)| + \sum_{k=1}^{n} |H_i^G(k) - H_j^G(k)| + \sum_{k=1}^{n} |H_i^B{}_i(k) - H_j^B(k)| \qquad \ldots (3)$$

Taking account of the variety of the forms of the television programs, sometimes the program has little correlations, and thus the above method for calculating the correlations between images might fail. Alternatively, the following assistant method for detecting advertisement can be used. Specifically, the detection is performed by using the characteristics of the advertisement contents themselves. There are apparent differences between the advertisements and the normal programs. The length of one television advertisement is generally very shot, and in order to clearly and concisely express the characters of goods, it requires the number of the pictures as many as possible so as to fully deliver information. Thus, the scene change rate of the advertisement is fast, and the color contrast thereof is strong.

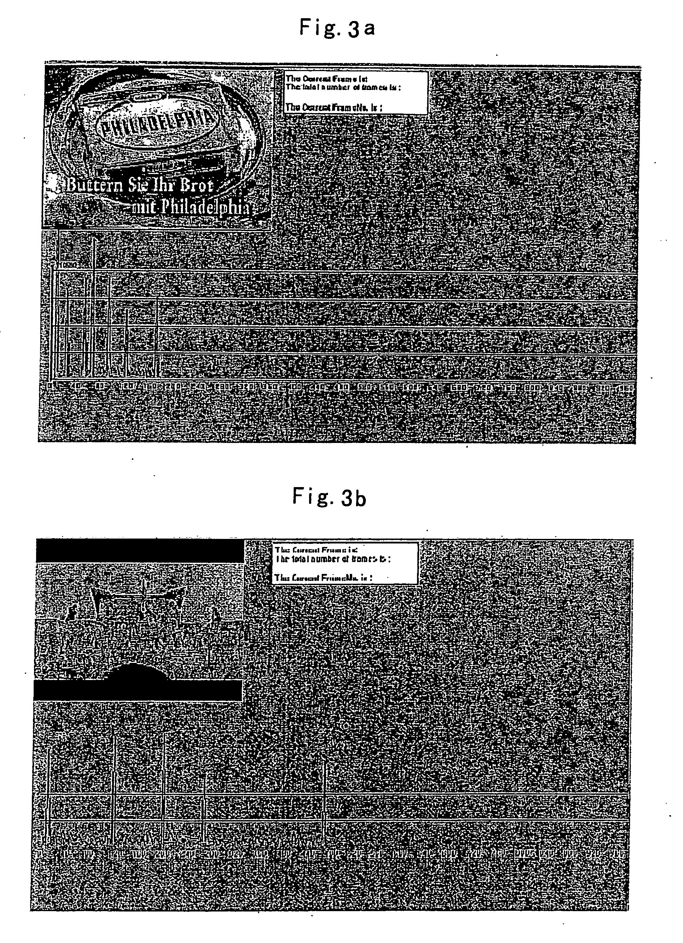

Fig. 3a shows the change rate of the video images for advertisements, and Fig. 3b shows the change rate of the video images for normal television programs. The position where a peak occurs in the drawings means that the image changes dramatically at this position. As shown in the drawings, for an advertisement with a length of about 8 seconds, more than 5 changing scenes can be detected, and the time lengths of the scenes are all not longer than 2 seconds. However, in a normal television program (as shown in Fig. 3b), scenes lasting 5 seconds or more frequently occur. Therefore, the scene change rate of advertisements is generally faster than that of normal programs. In a preferred embodiment, the long time scene detection is employed, that is, if the time interval between two scene changes is not less than a certain threshold, it is then considered that the advertisements are already ended. For instance, the threshold can be set to about 5 seconds or can be adjusted if necessary.

The primary principle of the scene change detection is to search for a good inter-frame difference comparison method to detect these peaks, in which where a difference goes beyond the set value is a scene change point. Similar to the inter-frame correlation analysis, the inter-frame difference analysis is performed preferably by using color histograms. The embodied calculation method is the same as above, and thus the detailed description will be omitted.

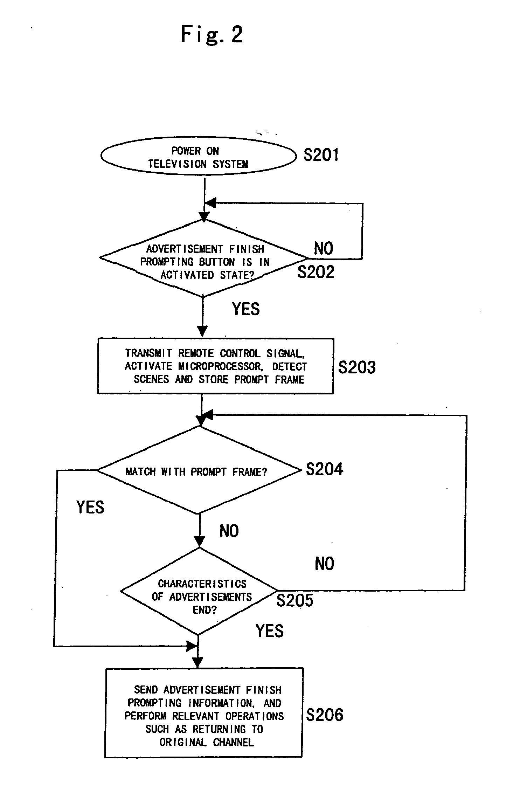

The operation flow of the method for automatically detecting the television advertisements will be described with reference to Fig. 2 as follows. As shown in Fig. 2, in step S201, the television set is powered on firstly, and video frames for about 5 to 10 seconds for example are stored in the buffer 4. When the advertisements occur in a progress of watching the television programs, the viewer can press the advertisement finish prompting button 10 to transmit the instruction to prompt the end of the advertisements to the receiver 8 included in the television set. In step S202, the receiver 8 detects whether the instruction to prompt the end of the advertisements transmitted from the signal transmitter 9 on the remote controller side is received or not. If the judgment result of step S202 is No, it is then continuously detected whether the instruction to prompt the end of the advertisements is received. If it is determined in step S202 that the instruction to prompt the end of the advertisements is received, the activating signal is provided to the controller 5 in step S203 to activate the controller 5. The controller 5 controls the video scene change detection and calculation unit 6 to detect an abrupt change in the video image frames, and the previous frame immediately before the abrupt change occurs is stored as a prompting frame in the buffer 4. In step S204, it is determined whether the latest received video frame stored in the buffer matches (correlates) with the prompting frame or not. If the latest received video frame matches (correlates) with the prompting frame, or the time interval between the scene changes is longer than the predetermined threshold, then the flow goes to step S207 in which the prompting signal generation unit 7 is controlled to generate the signal for prompting the end of the advertisements. The viewer is notified that the playing of the advertisements is ended in an appropriate manner such as sounding or displaying the prompting captions if the playing of the advertisements is end. If it is determined in step S204 that the latest received image does not match (correlate) with the stored prompting frame and the time interval between the scene changes is smaller than the predetermined threshold, the flow then goes to step S205. In step S205, it is determined that the playing of the advertisement is not ended and returns to step S204 to continue the correlation detection until it is detected that the received image frame matches with or correlate with the stored prompting frame. The method for detecting the image matching or correlating, or the changing from the advertisement images into the television program images can be the algorithm described above with respect to the apparatus of the present invention, and thus will be omitted.

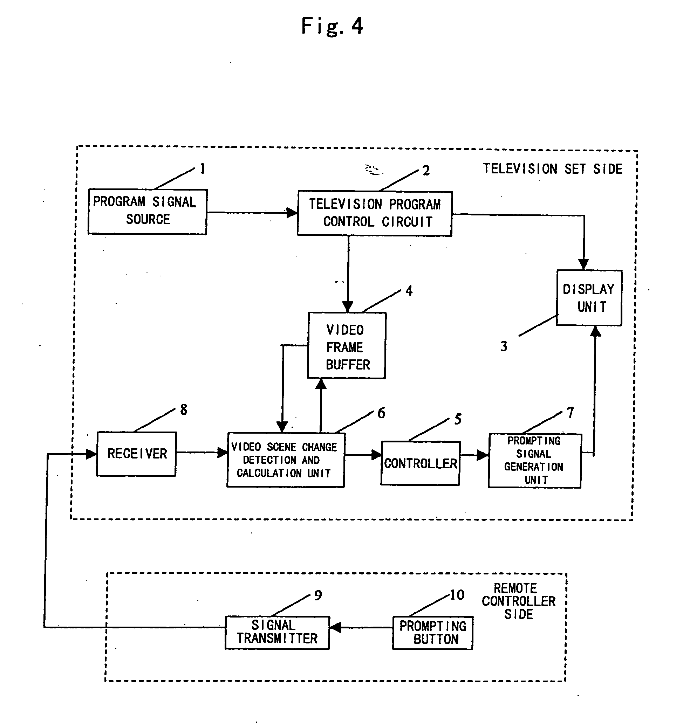

Fig. 4 is a block diagram showing a configuration of an apparatus for automatically detecting television advertisements according to another embodiment of the present invention, in which the units which are used in the present embodiment are the same as those in the embodiment as shown in Fig. 1 and are denoted with the same references as those in Fig. 1. The difference between the present embodiment and that as shown in Fig. 1 is in that on the television set side, the receiver 8 is directly connected to the video scene change detection and calculation unit 6, and activates the video scene change detection and calculation unit 6 to perform the image correlation detection when receiving the instruction to prompt the end of the advertisements. The controller 5 is connected between the video scene change detection and calculation unit 6 and the prompting signal generation unit 7. When the video scene change detection and calculation unit 6 detects an image frame matching or correlating with the prompting frame, it provides the activating signal to the controller 5, and the controller 5 controls the prompting signal generation unit 7 to generate the signal for prompting the end of the advertisements. In the present embodiment, the video scene change detection and calculation unit 6 detects the scene changes all the time no matter whether the prompting button transmits signals or not. Thus, only two frames of images adjacent to currently processed frame and the maintained image frame before the scene change are necessarily stored, such that the necessary storage capacity can be greatly reduced.

Although the present invention is illustrated with reference to the certain embodiments thereof, it is for the purpose of description only. It should be understood that various changes and modifications to the present invention are possible without departing from the spirit or scope of the present invention.

Industry Applicability

The apparatus and method for automatically detecting television advertisements according to the present invention are able to automatically detect the end of the advertisements such that the viewers need not wait for the replaying of the program in front of the television, and need not worry about the missing of the previous watched program while doing other things or watching other channels.

**Claims**

1.  An apparatus for automatically detecting television advertisements comprising:

   a video frame buffer for storing a first group of video frames and a second group of video frames received by a television in which a scene change rate of said second group of video frames is substantially different from that of said first group of video frames;
   a video scene change detection and calculation means for reading said first and second groups of video frames stored in said video frame buffer, determining the last frame immediately before said first group of video frames changes into said second group of video frames as a prompting frame, and calculating a correlation between a newly received video frame and said prompting frame;
   a prompting signal generation means for generating a prompting signal when said correlation between said newly received video frame and said prompting frame, which is detected by said video scene change detection and calculation means, is equal to or larger than a predetermined threshold; and
   a control means for controlling the operations of said video scene change detection and calculation means.

**2.** The apparatus for automatically detecting television advertisements according to claim 1, wherein said video frame buffer is provided with a dedicated storage area for storing said prompting frame.

**3.** The apparatus for automatically detecting television advertisements according to claim 1, further comprises a memory for storing said prompting frame is provided separately from said video frame buffer.

**4.** The apparatus for automatically detecting television advertisements according to claim 1, wherein said video scene change detection and calculation means detects the changing from said second group of video frames to said first group of video frames based on the scene change intervals of said first and second group of video frames, and when the scene change interval is smaller than a predetermined threshold, determines that said second group of video frames is changed into said first group of video frames, and provides a signal to said prompting signal generation means.

**5.** The apparatus for automatically detecting television advertisements according to claim 1, wherein said video scene change detection and calculation means calculates the correlation between said newly received video frame and said prompting frame based on histograms of the video frames.

**6.** An apparatus for automatically detecting television advertisements comprising:

a video frame buffer for storing a first group of video frames and a second group of video frames received by a television in which a scene change rate of said second group of video frames is substantially different from that of said first group of video frames;
a video scene change detection and calculation means for reading said first and second groups of video frames stored in the video frame buffer, determining the last frame immediately before said first group of video frames changes into said second group of video frames as a prompting frame, and calculating a correlation between a newly received video frame and said prompting frame;
a prompting signal generation means for generating a prompting signal when the correlation between said newly received video frame and said prompting frame, which is detected by said video scene change detection and calculation means, is equal to or larger than a predetermined threshold; and
a control means for controlling said prompting signal generation means to generate said prompting signal in accordance with the changing from said second group of video frames to said first group of video frames detected by said video scene change detection and calculation means.

**7.** The apparatus for automatically detecting television advertisements according to claim 6, wherein said video frame buffer is provided with a dedicated storage area for storing said prompting frame.

**8.** The apparatus for automatically detecting television advertisements according to claim 6, further comprises a memory for storing said prompting frame is provided separately from said video frame buffer.

**9.** The apparatus for automatically detecting television advertisements according to claim 6, wherein said video scene change detection and calculation means detects the changing from said second group of video frames to said first group of video frames based on the change intervals of said first and second group of video frames, and when the scene change interval is smaller than a predetermined threshold, determines that said second group of video frames is changed into said first group of video frames, and provides a signal to said prompting signal generation means.

**10.** The apparatus for automatically detecting television advertisements according to claim 6, wherein said video scene change detection and calculation means calculates the correlation between said newly received video frame and said prompting frame based on histograms of the video frames.

**11.** A method for automatically detecting television advertisements comprising the steps of:

storing a first group of video frames and a second group of video frames received by a television in which a scene change rate of the second group of video frames is substantially different from that of said first group of video frames;
when an instruction to prompt an end of the advertisements is received, reading the stored first and second groups of video frames, and detecting when said second group of video frames is changed into said first group of video frames; and
generating a prompting signal when said second group of video frames is changed into said first group of video frames.

12. The method for automatically detecting television advertisements according to claim 11, wherein the step of detecting when said second group of video frames is changed into said first group of video frames comprises: calculating the last frame immediately before said first group of video frames changes into said second group of video frames as a prompting frame, and calculating a correlation between a newly received video frame and said prompting frame.

13. The method for automatically detecting television advertisements according to claim 11, wherein the step of detecting when said second group of video frames is changed into said first group of video frames comprises: detecting the changing from the second group of video frames to the first group of video frames based on the change intervals of said first and second group of video frames; and determining that said second group of video frames is changed into said first group of video frames when the scene change interval is smaller than a predetermined threshold.

14. The method for automatically detecting television advertisements according to claim 11, wherein the step of detecting when said second group of video frames is changed into said first group of video frames comprises: calculating the correlation between said newly received video frame and a prompting frame based on histograms of the video frames.

Fig. 1

TELEVISION SET SIDE

PROGRAM SIGNAL SOURCE — 1

TELEVISION PROGRAM CONTROL CIRCUIT — 2

DISPLAY UNIT — 3

VIDEO FRAME BUFFER — 4

RECEIVER — 8

CONTROLLER — 5

VIDEO SCENE CHANGE DETECTION AND CALCULATION UNIT — 6

PROMPTING SIGNAL GENERATION UNIT — 7

REMOTE CONTROLLER SIDE

SIGNAL TRANSMITTER — 9

PROMPTING BUTTON — 10

Fig. 2

```
        ┌──────────────────────┐
        │      POWER ON        │  S201
        │  TELEVISION SYSTEM   │
        └──────────┬───────────┘
                   │
                   ▼ ◄─────────────────────────┐
              ╱─────────────╲                  │
             ╱ ADVERTISEMENT  ╲    NO           │
            ╱  FINISH PROMPTING ╲──────────────┘
            ╲  BUTTON IS IN     ╱  S202
             ╲ ACTIVATED STATE?╱
              ╲───────┬───────╱
                      │ YES
                      ▼
        ┌──────────────────────────────┐
        │ TRANSMIT REMOTE CONTROL       │
        │ SIGNAL, ACTIVATE              │  S203
        │ MICROPROCESSOR, DETECT        │
        │ SCENES AND STORE PROMPT FRAME │
        └──────────────┬───────────────┘
                       │
                       ▼ ◄──────────────────────┐
                 ╱─────────────╲                │
                ╱               ╲   S204         │
      ┌────────╱ MATCH WITH      ╲               │
      │ YES    ╲ PROMPT FRAME?   ╱               │
      │         ╲               ╱                │
      │          ╲─────┬───────╱                 │
      │                │ NO                       │
      │                ▼                NO        │
      │         ╱─────────────╲──────────────────┘
      │        ╱ CHARACTERISTICS╲  S205
      │        ╲ OF ADVERTISEMENTS╱
      │         ╲ END?          ╱
      │          ╲─────┬───────╱
      │                │ YES
      └───────────────►▼
        ┌──────────────────────────────┐
        │ SEND ADVERTISEMENT FINISH     │
        │ PROMPTING INFORMATION, AND    │
        │ PERFORM RELEVANT OPERATIONS   │  S206
        │ SUCH AS RETURNING TO          │
        │ ORIGINAL CHANNEL              │
        └──────────────────────────────┘
```

Fig. 3 a

Fig. 3b

# Fig. 4

TELEVISION SET SIDE

PROGRAM SIGNAL SOURCE  1

TELEVISION PROGRAM CONTROL CIRCUIT  2

DISPLAY UNIT  3

VIDEO FRAME BUFFER  4

RECEIVER  8

VIDEO SCENE CHANGE DETECTION AND CALCULATION UNIT  6

CONTROLLER  5

PROMPTING SIGNAL GENERATION UNIT  7

REMOTE CONTROLLER SIDE

SIGNAL TRANSMITTER  9

PROMPTING BUTTON  10

<table>
<tr><td colspan="2" align="center">**INTERNATIONAL SEARCH REPORT**</td><td>International application No.<br>PCT/CN2004/000384</td></tr>
</table>

**A. CLASSIFICATION OF SUBJECT MATTER**

IPC7 H04N5/44

According to International Patent Classification (IPC) or to both national classification and IPC

**B. FIELDS SEARCHED**

Minimum documentation searched (classification system followed by classification symbols)

IPC7 H04N ,H04H

Documentation searched other than minimum documentation to the extent that such documents are included in the fields searched

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | CN1130004A(INTE-N) 28, Aug.1996（28.08.1996）<br>Claim 1、2, page 3,line 14—page 9 line 6, Fig.1 | 1—3, 6—8, 11—12 |
| Y | | 5, 10, 14 |
| Y | JP2000036966A（KOKU）2,Feb.2000（02.02.2000）abstract | 5, 10, 14 |
| A | US5708477A（FORB-I）13,Jan.1998（13.01.1998）<br>Claim1,column 2 line 11—column 5 line 17 | 1—14 |
| A | JP2000165807A(SONY) 16,June 2000（16.06.2000）Whole document | 1—14 |

☐ Further documents are listed in the continuation of Box C. ☒ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim (S) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search<br>05, July 2004 | Date of mailing of the international search report<br>2 2 · JUL 2004 (2 2 · 0 7 · 2 0 0 4) |
|---|---|
| Name and mailing address of the ISA/<br>6 Xitucheng Rd., Jimen Bridge, Haidian District,<br>100088 Beijing, China<br>Facsimile No. 86-10-62019451 | Authorized officer<br>Yuan Jin<br>Telephone No. 86-10-62094647 |

Form PCT/ISA /210 (second sheet) (January 2004)

## INTERNATIONAL SEARCH REPORT
### Information on patent family members

| | International application No. |
|---|---|
| | PCT/CN2004/000384 |

| CN1130004A | 28—08—1996 | WO9506985 A1 | 09—03—1995 |
|---|---|---|---|
| | | EP0716792 A1 | 19—06—1996 |
| | | JP9502063T T | 25—02—1997 |
| | | EP0716792 B1 | 02—05—1997 |
| | | DE59402618G G | 05—06—1997 |
| | | ES2102249T T3 | 16—07—1997 |
| | | US5870151 A | 09—02—1999 |

Form PCT/ISA /210 (patent family annex) (January 2004)